# EUROPÄISCHE PATENTANMELDUNG

(11) **EP 0 570 748 A1**
(43) Veröffentlichungstag der Anmeldung: **24.11.1993**
(21) Anmeldenummer: 93107128.6
(22) Anmeldetag: 03.05.1993
(51) Int. Cl.: F16L 21/06

(54) **Verbindungsmuffe zum Verbinden von dünnwandigen Rohrenden**

(30) Priorität: 18.05.1992 DE 4216403
(71) Anmelder: METU-System Meinig KG, D-7201 Rietheim-Weilheim 2 (DE)
(72) Erfinder: Meinig, Manfred, W-7201 Rietheim-Weilheim 2 (DE)
(74) Vertreter: Patentanwälte Westphal, Buchner, Mussgnug Neunert, Göhring

(57) **Zusammenfassung**

Verbindungsmuffe zum Verbinden von dünnwandigen Rohrenden mit einem rundgebogenen Blechstreifen (10) und einem an der Innenseite desselben anliegenden Dichtstreifen (30), und einem Spannschloß (18), zum Festziehen der Verbindungsmuffe auf den zu verbindenden Rohrenden. Ein etwa in der axialen Mitte der Verbindungsmuffe im Bereich des Spannschlosses (18) lose festgelegtes Abstandsglied (32) ragt durch den Dichtstreifen (30) ins Innere der Verbindungsmuffe. Das im ungespannten Zustand nach innen ragende Ende (36) des Abstandsgliedes (32) wird beim Festspannen durch die sich immer mehr überlappenden Enden (14, 16) des Blechstreifens (10) so nach außen gepreßt, daß es sich in die elastische Innenfläche bzw. einen Schlitz des Dichtstreifens (30) drückt.

## Beschreibung

Die Erfindung betrifft eine Verbindungsmuffe nach dem Oberbegriff des Anspruchs 1.

Bei bekannten Verbindungsmuffen dieser Art läßt sich nicht gewährleisten, daß die von beiden Seiten in die Verbindungsmuffe eingeschobenen Rohre etwa gleich weit eingeschoben werden und somit beim Spannen der Verbindungsmuffe eine gute Abdichtung an beiden Rohrenden erzielt wird. Insbesondere wenn die Durchmesser der beiden Rohrenden ungleich sind, was z.B. bei allen Arten der sehr häufig verwendeten Steckverbindungen von Rohren der Fall ist oder wenn die Rohrenden nicht einwandfrei geschnitten, leicht verbogen oder beschädigt sind, ist es noch schwieriger, die Verbindungsmuffe so auf die Rohrenden aufzusetzen, daß diese an der Muffe gleichmäßig abgedichtet werden und daß andererseits an dem Dichtungsstreifen im Inneren der Verbindungsmuffe kein nach innen stehender Ansatz gebildet wird. Ein solcher Ansatz würde den Luftstrom behindern und besonders bei Absaugungen und Spänetransport durch das Rohr würde sich an einem solchen Ansatz das im Luftstrom mitgeführte Material festsetzen. In jedem Falle würde sich aber eine sehr umständliche und zeitaufwendige Montage ergeben.

Durch die Erfindung soll eine Verbindungsmuffe der eingangs genannten Art so verbessert werden, daß sie schnell und einfach auf die Rohrenden aufgesetzt und an diesen abgedichtet werden kann, ohne daß dabei ins Rohrinnere ragende Ansätze gebildet werden.

Diese Aufgabe wird erfindungsgemäß durch die Merkmale des Anspruchs 1 gelöst.

Die beiden Rohrenden können ohne besondere Sorgfalt einfach bis zum Anschlag am Anschlagglied von beiden Seiten in die Verbindungsmuffe eingeschoben werden, wobei die beiden Rohrenden nahezu mittig in der Verbindungsmuffe zu liegen kommen. Anschließend wird die Spanneinrichtung, vorzugsweise durch Anziehen eines einzigen Spannbolzens, gespannt, wodurch eine zunehmende Überlappung der den Mittelteil des Abstandsgliedes zwischen sich einklemmenden Blechstreifenenden erfolgt. Im endgültig gespannten Zustand, in dem die Verbindungsmuffe fest und abdichtend an der Außenseite der beiden Rohrenden anliegt, ist das zuerst nach innen ragende und als Abstandshalter zwischen den Rohrenden dienende zweite Ende des Abstandsgliedes so weit nach außen gedrückt, daß es in die Innenfläche bzw. einen entsprechend langen Schlitz des elastischen Dichtstreifens gepreßt wird und nicht mehr in den Innenraum vorsteht. Dadurch wird eine weitgehend glatte Innenfläche des Rohres an der Stelle der Verbindungsmuffe erreicht. Auch der Restspalt zwischen den Rohrenden wird durch elastisch in diesen Spalt nach innen gedrängtes Material des Dichtstreifens im wesentlichen ausgefüllt. Selbst leicht schräg abgeschnittene oder mit Spiralfalzen versehene Rohre werden somit gut abgedichtet und bilden zusammen mit der Verbindungsmuffe eine glatte Innenfläche.

Die Unteransprüche sind auf vorteilhafte Ausgestaltungen der Erfindung gerichtet.

So kann nach Anspruch 2 das Anschlagglied aus einem geeignet gebogenen Federdraht bestehen, wobei nach Anspruch 3 zweckmäßigerweise das zweite Ende bogenförmig nach innen ragt, so lange die Verbindungsmuffe noch nicht festgespannt ist. Im gespannten Zustand erhält dieses Ende dann zwangsläufig etwa die Krümmung des Rohrinneren.

Nach Anspruch 4 kann das Anschlußglied einfach an der Spanneinrichtung, z.B. einem sog. Spannschloß mit Axialbolzen oder dergl., eingehängt werden. Nach Anspruch 5 erfolgt das lose Einhängen des Anschlaggliedes an der Spanneinrichtung, z.B. einem sog. Spannschloß mit Axialbolzen oder dgl., einfach durch zwei nach außen über einen Winkel von beispielsweise ca. 270° gebogene und/oder abgewinkelte Bügel, die um einen Axialbolzen oder ein anderes geeignetes Teil der Spannvorrichtung gehängt werden.

Bei einer einfacheren Ausführungsform nach Anspruch 6 kann das erste Ende des Anschlaggliedes auch einfach an dem äußeren der beiden sich überlappenden Enden des Blechstreifens, nach Anspruch 7 vorzugsweise durch Punktschweißung, befestigt werden.

Gemäß Anspruch 8 wird eine besonders gute Abdichtung der Verbindungsmuffe an den Rohrenden erzielt, wenn der die Muffe bildende Blechstreifen an seinen axialen Rändern so eingerollt ist, daß beim Festspannen der Dichtstreifen in die eingerollten Ränder gepreßt wird und diese Ränder sich mit metallischer Haftung an der Außenseite der Rohre anlegen.

Anhand der Figuren wird ein Ausführungsbeispiel der Erfindung näher erläutert. Es zeigt
- Fig. 1: einen schematischen Axialschnitt durch eine erste Ausführungsform der Verbindungsmuffe in ungespanntem Zustand,
- Fig. 2: einen entsprechenden Axialschnitt in gespanntem Zustand,
- Fig. 3: eine Schrägansicht des in den Figuren 1 und 2 dargestellten Abstandsgliedes,
- Fig. 4: einen der Fig. 1 entsprechenden vergrößerten Teilschnitt durch eine zweite Ausführungsform der Verbindungsmuffe, und
- Fig. 5: eine Schrägansicht des in Fig. 4 dargestellten Abstandsgliedes.

In allen Figuren sind für gleiche Teile die gleichen Bezugszeichen verwendet.

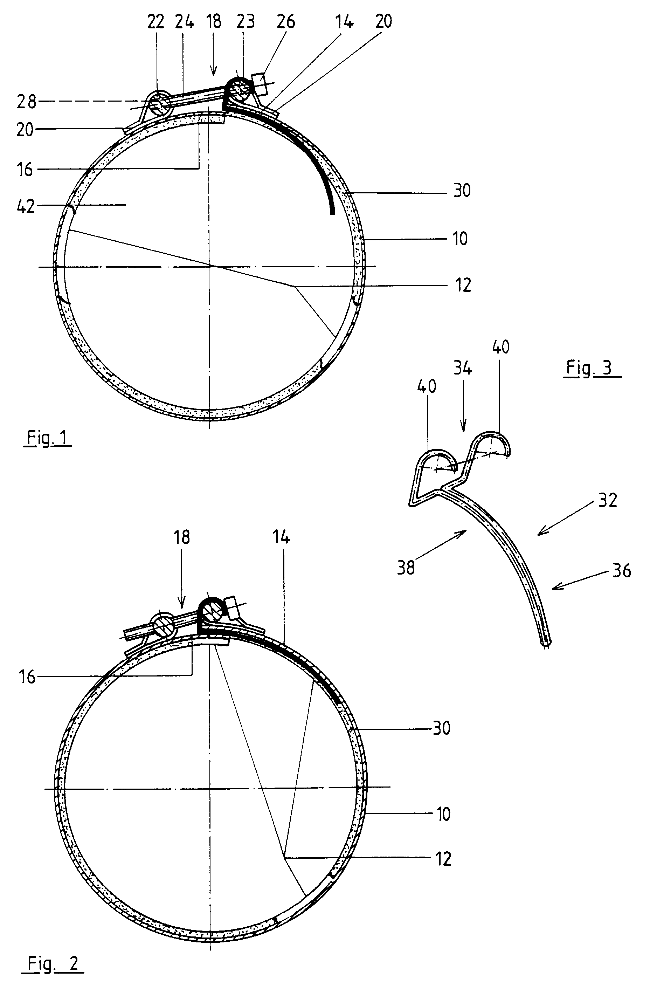

Die in den Figuren dargestellte Verbindungsmuffe weist einen etwa kreisrund gebogenen Blechstreifen 10 mit etwa senkrecht eingerollten radialen Rändern 12 auf, dessen Enden 14 und 16 sich überlappen. Auf der Außenseite des Blechstreifens 10 ist ein allgemein mit 18 bezeichnetes Spannschloß angebracht, das zwei auf dem Blechstreifen 10 befestigte Laschen 20 aufweist, durch die jeweils ein Axialbolzen 22 bzw. 23 gesteckt ist. Durch gegenüberliegende Querbohrungen der beiden Axialbolzen 22, 23 ist ein Gewindebolzen 24 geführt, der mit seinem Kopf 26 an dem einen Axialbolzen 23 anliegt und in die mit Innengewinde versehene Querbohrung 28 des gegenüberliegenden Axialbolzens 22 eingeschraubt werden kann. Beim Einschrauben des Gewindebolzens 24 in die Gewindebohrung 28 werden die sich überlappenden Enden 14 und 16 des Blechstreifens 10 aus der ungespannten Stellung gemäß Fig. 1 in die gespannte Stellung gemäß Fig. 2 verschoben, in der sie sich wesentlich stärker überlappen, wodurch die Kanten der Ränder 12 auf der Außenseite der nicht gezeigten Rohrenden, auf denen die Verbindungsmuffe festgespannt wird, zur festen, metallisch haftenden Auflage kommen. Ein im wesentlichen die ganze Innenfläche des Blechstreifens 10 überdeckender Dichtstreifen 30 wird dadurch fest und abdichtend auf die Außenseite der Rohrenden gepreßt, wobei die axialen Ränder des Dichtstreifens 30 durch die eingerollten Ränder 12 des Blechstreifens 10 gehalten werden.

Ein in Fig. 3 ausführlich dargestelltes und allgemein mit 32 bezeichnetes Abstandsglied besteht aus Federdraht und weist ein erstes Ende 34, ein zweites Ende 36 und einen verbindenden Mittelteil 38 auf. Das erste Ende 34 besteht aus zwei gespreizten, gegenüber dem Mittelteil 38 insgesamt um etwa 270° zum zweiten Ende 36 hin abgewinkelten und umgebogenen Bügeln 40, die beim Einbau des Abstandsgliedes 32 in die Verbindungsmuffe in der aus den Figuren 1 und 2 ersichtlichen Weise lose über den Axialbolzen 23 gehängt werden und diesen teilweise umgreifen. Mittelteil 38 und zweites Ende 36 werden durch zwei parallele und eng aneinanderliegende Abschnitte des gleichen Federdrahtes gebildet. Nach dem Einbau in die Verbindungsmuffe liegt der Mittelteil 38 im ungespannten Zustand gemäß Fig. 1 wenigstens teilweise zwischen den sich wenig überlappenden Enden 14, 16 des Blechstreifens 10. Das zweite Ende 36 ist gegenüber dem Mittelteil 38 so gebogen, daß es durch den Dichtstreifen 30, vorzugsweise durch einen dafür vorgesehenen in Umfangsrichtung verlaufenden und nicht dargestellten Schlitz des Dichtungsstreifens, in den Innenraum 42 der Verbindungsmuffe ragt. Die beiden Rohrenden können nun axial in die Verbindungsmuffe bis zum Anschlag an dem nach innen ragenden zweiten Ende 36 des Anschlaggliedes 32 eingeschoben werden. Anschließend wird der Verbindungsbolzen 24 angezogen und dadurch das Spannschloß gespannt, wodurch der Mittelteil 38 und das zweite Ende 36 des Abstandsgliedes 32 zunehmend zwischen die sich immer mehr überlappenden Enden 14 und 16 des Blechstreifens 10 zu liegen kommen und das nach innen ragende zweite Ende 36 dadurch in die elastische Innenfläche bzw. den Schlitz des Dichtstreifens 30 gepreßt wird. Somit ist kein nach innen ragender Teil mehr vorhanden, der den Luftstrom in den miteinander verbundenen Rohren behindern könnte.

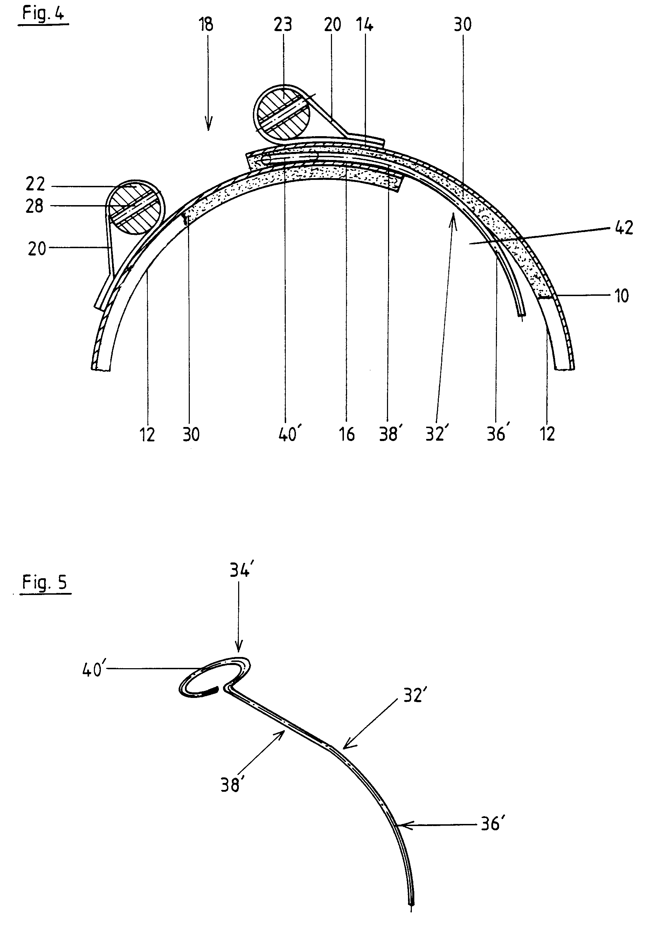

Das in den Figuren 4 und 5 dargestellte zweite Ausführungsbeispiel der erfindungsgemäßen Verbindungsmuffe unterscheidet sich von dem Ausführungsbeispiel gemäß Figuren 1 bis 3 im wesentlichen durch die einfachere Ausbildung des Abstandsgliedes 32'. In Fig. 4 ist beim Spannschloß 18 der Gewindebolzen 24 zur Vereinfachung weggelassen. Das Abstandsglied 32' besteht bei dieser Ausführungsform aus einem einfachen Federdraht mit Mittelabschnitt 38' und nach innen gebogenem zweiten Ende 36'. Das erste Ende 34' besteht aus einem einstückig angeformten, quer zur Biegungsebene des zweiten Endes 36' verlaufenden offenen Ring 40', der durch Punktschweißung in der in Fig. 4 gezeigten Form an der Innenseite des äußeren Endes 14 der sich überlappenden Enden 14, 16 des Blechstreifens 10 befestigt ist. Im übrigen ist die Wirkungsweise der Ausführungsform gemäß den Figuren 4 und 5 die gleiche wie diejenige der ersten Ausführungsform

## Patentansprüche

1. Verbindungsmuffe zum Verbinden von dünnwandigen Rohrenden mit einem rohrförmig gebogenen Blechstreifen, dessen Enden sich überlappen und an dessen Außenseite eine durch einen Spannbolzen betätigbare Spanneinrichtung vorgesehen ist, und mit einem die Innenseite des Blechstreifens mit Ausnahme des äußeren der beiden sich überlappenden Enden im wesentlichen überdeckenden elastischen Dichtstreifen, dadurch gekennzeichnet, daß an den sich überlappenden Enden (14, 16) oder im Bereich derselben ein erstes Ende (34, 34') eines federnden Anschlaggliedes (32, 32') festgelegt ist, daß ein Mittelteil (38, 38') des Anschlaggliedes (32, 32') zwischen den sich überlappenden Enden (14, 16) sowie durch einen Schlitz des Dichtstreifens (30) hindurchgeführt ist, und daß ein zweites Ende (36, 36') im ungespannten Zustand der Verbindungsmuffe (Fig. 1) etwa in der axialen Mitte der Verbindungsmuffe in den vom Dichtstreifen (30) umschlossenen Innenraum (42) der Verbindungsmuffe ragt und im gespannten Zustand der Verbindungsmuffe (Fig. 2) durch die sich überlappenden Enden (14, 16) des Blechstreifens (10) in die Innenseite bzw. den Schlitz des elastischen Dichtstreifens (30) gepreßt ist.

2. Verbindungsmuffe nach Anspruch 1, dadurch gekennzeichnet, daß das Anschlagglied (32, 32') aus Federdraht besteht.

3. Verbindungsmuffe nach Anspruch 1 oder 2, dadurch gekennzeichnet, daß das zweite Ende (36, 36') im ungespannten Zustand der Verbindungsmuffe (Fig. 1) bogenförmig in den Innenraum (42) der Verbindungsmuffe ragt.

4. Verbindungsmuffe nach einem der vorangehenden Ansprüche, dadurch gekennzeichnet, daß das erste Ende (34) des Anschlaggliedes (32) an der Spanneinrichtung (18) eingehängt ist.

5. Verbindungsmuffe Anspruch 4, dadurch gekennzeichnet, daß das erste Ende (34) des Anschlaggliedes (32) in zwei nach außen gebogene Bügel (40) aufgespreizt ist, die jeweils ein axial verlaufendes Teil (23) der Spanneinrichtung (18) umgreifen und an diesem lose eingehängt sind.

6. Verbindungsmuffe nach einem der vorangehenden Ansprüche, dadurch gekennzeichnet, daß das erste Ende (34') des Anschlaggliedes (32') an dem äußeren Ende (14) der sich überlappenden Enden (14, 16) des Blechstreifens (10) befestigt ist.

7. Verbindungsmuffe nach Anspruch 6, dadurch gekennzeichnet, daß das erste Ende (34') durch Punktschweißung befestigt ist.

8. Verbindungsmuffe nach einem der vorangehenden Ansprüche, dadurch gekennzeichnet, daß der Dichtstreifen (30) durch die eingerollten axialen Ränder (12) des Blechstreifens (10) gehalten ist.
